## Europäisches Patentamt

## European Patent Office

## Office européen des brevets

(19)

(11) Veröffentlichungsnummer: **0 184 586**
**B1**

(12) **EUROPÄISCHE PATENTSCHRIFT**

(45) Veröffentlichungstag der Patentschrift:
**14.09.88**

(51) Int. Cl.⁴: **B 22 D 11/126,** B 23 K 31/00,
B 23 K 37/00

(21) Anmeldenummer: **84114984.2**

(22) Anmeldetag: **08.12.84**

(54) **Verfahren zum Erzeugen bartfreier Stranggussstücke und Vorrichtung zu dessen Durchführung.**

(43) Veröffentlichungstag der Anmeldung:
**18.06.86 Patentblatt 86/25**

(45) Bekanntmachung des Hinweises auf die Patenterteilung:
**14.09.88 Patentblatt 88/37**

(84) Benannte Vertragsstaaten:
**AT BE CH DE FR GB IT LI LU NL SE**

(56) Entgegenhaltungen:
**DE - A - 2 925 419**
**DE - A - 2 926 971**
**DE - A - 3 019 691**

(73) Patentinhaber: **AUTE Gesellschaft für autogene Technik mbH, Zollikerstrasse 228, CH-8029 Zürich (CH)**

(72) Erfinder: **Lotz, Horst K., Kiefernweg 13, D-6200 Wiesbaden-Delkenheim (DE)**

(74) Vertreter: **Blumbach Weser Bergen Kramer Zwirner Hoffmann Patentanwälte, Sonnenbergerstrasse 43, D-6200 Wiesbaden 1 (DE)**

**Beschreibung**

Die Erfindung betrifft ein Verfahren zum Erzeugen bartfreier Stranggussstücke, bei dem die durch Brennschneiden an der Brennschneidunterkante entstehenden Bärte aufgeschmolzen und durch die kinetische Energie eines Gasstrahls weggeblasen werden, wobei Sauerstoff rechtwinklig zur Schneidrichtung schräg gegen die Werkstückunterfläche geblasen wird.

Es ist bekannt, aus Flachdüsen einen Luftstrom gegen die sich ausbildenden Bärte zu richten. Der Bart wird zwar dabei verringert, jedoch ist der verbleibende Restbart zu gross und hängt zu fest am Grundmaterial des Werkstücks.

Insbesondere ist ein Verfahren zur Herstellung bartfreier Stranggussstücke und eine Vorrichtung zur Durchführung dieses Verfahrens bekannt (DE-OS 2925419), bei dem gemäss Oberbegriff des Hauptanspruchs die entstehenden Bärte aufgeschmolzen und weggeblasen werden, indem Sauerstoff rechtwinklig zur Schneidrichtung und schräg gegen die Werkstückfläche geblasen wird. Dabei konnte keine befriedigende Entfernung der Bärte erzielt werden. Die Schlackenbärte verschieben sich dabei in eine Lage, in der sie von den Entbartungsdüsen nicht mehr erreicht werden können, d.h. die aufgeschmolzenen Schlackenbärte weichen dem Gasstrahl aus und bleiben an der Stelle, wo sie vom Gasstrahl nicht mehr erreicht werden, am Werkstück haften. Mit dem Einsatz von Sauerstoff wurde dabei zwar eine Verbesserung erzielt, indem die Bärte zum Teil wegbrannten, jedoch konnte nur eine unvollständige Wirkung erzielt werden.

Der Erfindung liegt daher die Aufgabe zugrunde, ein Verfahren verfügbar zu machen, bei dem eine vollständige Beseitigung von Brennschneidbärten in einer wirtschaftlichen und apparativ vergleichsweise wenig aufwendigen Weise erzielbar ist.

Zur Lösung dieser Aufgabe schlägt die Erfindung vor, dass Gase von oben in die Schnittfuge hinter dem Schneidstrahl eingeblasen werden und dass die entstehenden Restbärte mit Hilfe von Schneidrollen oder dadurch entfernt werden, dass Luft unter einem Winkel von 3 bis 10° zur Werkstückunterfläche neben die Schnittfuge in Schneidrichtung geblasen wird.

Dabei kann zweckmässigerweise Luft von oben in die Schnittfuge eingeblasen werden.

Mit Vorteil wird der Sauerstoff unter einem Winkel von 10 bis 30° gegen die Werkstückunterfläche geblasen. Dabei kann die gegen die Werkstückunterfläche geblasene Luft mit Sauerstoff zu einem Luft-Sauerstoff-Gemisch angereichert werden.

Gemäss einer Abwandlung des Verfahrens ist vorgesehen, dass die Schneidrollen von unten gegen die Werkstückkante angepresst und die Restbärte zur Schnittfuge hin abgeschert werden.

Die Erfindung macht gleichermassen eine Vorrichtung zur Durchführung des Verfahrens verfügbar, bei der rechtwinklig zur Schneidrichtung und schräg gegen die Werkstückunterfläche Flämmblasdüsen gerichtet sind. Die Besonderheit der Vorrichtung besteht darin, dass der Winkel, mit dem die Flämmblasdüse gegen die Werkstückunterfläche gerichtet ist, 10 bis 30° beträgt, dass hinter dem Schneidstrahl über der Schnittfuge Schnittfugensäuberungsdüsen angeordnet sind und dass Restputzdüsen neben der Schnittfuge in Schneidrichtung unter einem Winkel von 3 bis 30° zur Werkstückunterfläche gerichtet sind.

Weitere Besonderheiten hinsichtlich der Düsenanordnungen sind in entsprechenden Unteransprüchen gekennzeichnet. Eine abgewandelte Ausführungsform der Vorrichtung besteht darin, dass zum Entfernen der Restbärte Schneidrollen vorgesehen sind, die von unten gegen das Werkstück gedrückt sind und die eigentlichen Schnittkanten um maximal Schnittfugenbreite überragen und in Schneidrichtung den maximalen Bart- oder Bartrestquerschnitt entsprechend ausreichend versetzt hintereinander angeordnet sind.

Weitere erfinderische Besonderheiten hinsichtlich der Schneidrollenanordnung sind in den Unteransprüchen gekennzeichnet.

Gemäss einer Fortbildung der Erfindung ist vorgesehen, dass die Schneiddüsen mit der Bartbeseitigungseinrichtung zu einer Arbeitseinheit zusammengefasst sind.

Zum Längsteilen eines Werkstücks in mehrere Teilstücke sind mit Vorteil mehrere Artbeitseinheiten vorgesehen, wobei jede für sich motorisch mit Wegmessung verstellbar ist.

Eine zweckmässige Ausbildung besteht darin, dass die Arbeitseinheiten auf einem höhenverstellbaren Tisch montiert sind und die genauen Düsenhöhenabstände nach der Lage eines auf der Werkstückoberfläche schleifenden Tasthebels nachstellbar sind.

Eine weitere vorteilhafte Weiterbildung besteht darin, dass die Arbeitseinheit auf einem mit Schneidgeschwindigkeit längsverfahrbaren Wagen angeordnet, über und unter das Werkstück reicht und ein das Werkstück während des Schneidens unterstützender Zu- und Abführrollgang mit absenkbaren Rollen zum jeweiligen Absenken im Arbeitsbereich ausgerüstet ist.

Um die absolute Breite und genaue Lage des Werkstücks zu messen, sind an den beiden Seiten des Werkstücks Messrollen vorgesehen, die Messergebnisse zur Steuerung der Arbeitseinheit zum Erzielen gleich breiter Teilstücke an einen Rechner geben, der den jeweiligen Brenner-Querverfahrmotor steuert.

Die Erfindung soll nachstehend anhand von Ausführungsbeispielen unter Bezugnahme auf die beigefügten Zeichnungen näher erläutert werden. In den Zeichnungen zeigen:

Fig. 1 eine schematische Darstellung der Düsenanordnung gemäss dem erfindungsgefnässen Verfahren und seiner Vorrichtung;

Fig. 2 eine Seitenansicht der Düsenanordnung nach Fig. 1;

Fig. 3 eine Ansicht in Schneidrichtung auf die Düsenanordnung nach Fig. 1;

Fig. 4 eine Teil-Vorderansicht einer Mehrfach-Längsteilanlage, und

Fig. 5 eine Schneidrolle zur Restbartbeseitigung.

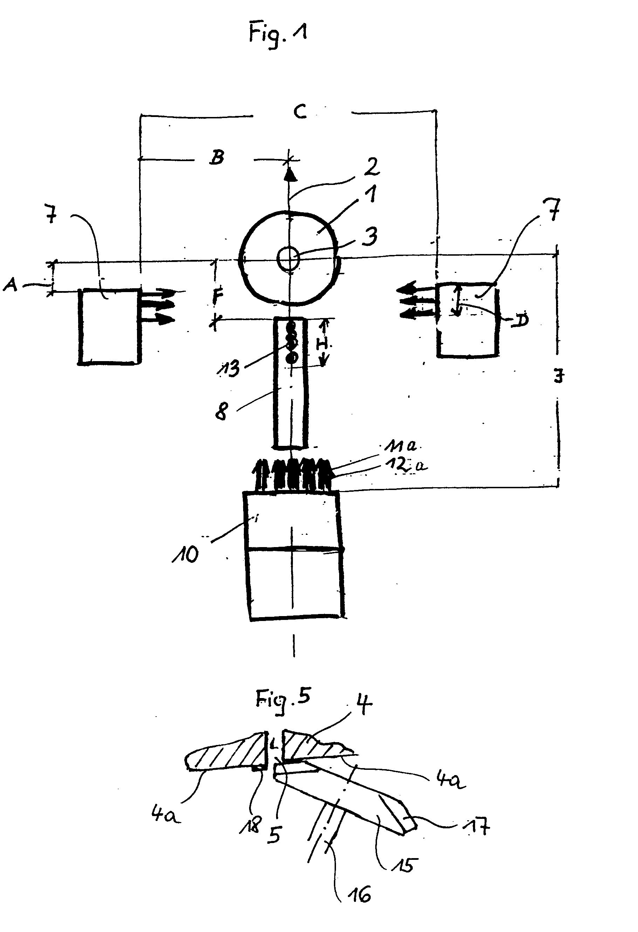

In Fig. 1 ist schematisch die Anordnung der Düsen für ein Verfahren zum Erzeugen bartfreier Stranggussstücke bzw. einer Vorrichtung zur Durchführung in Draufsicht dargestellt, wobei das Werkzeug weggelassen ist, so dass die Düsen über und unter dem Werkstück sichtbar sind.

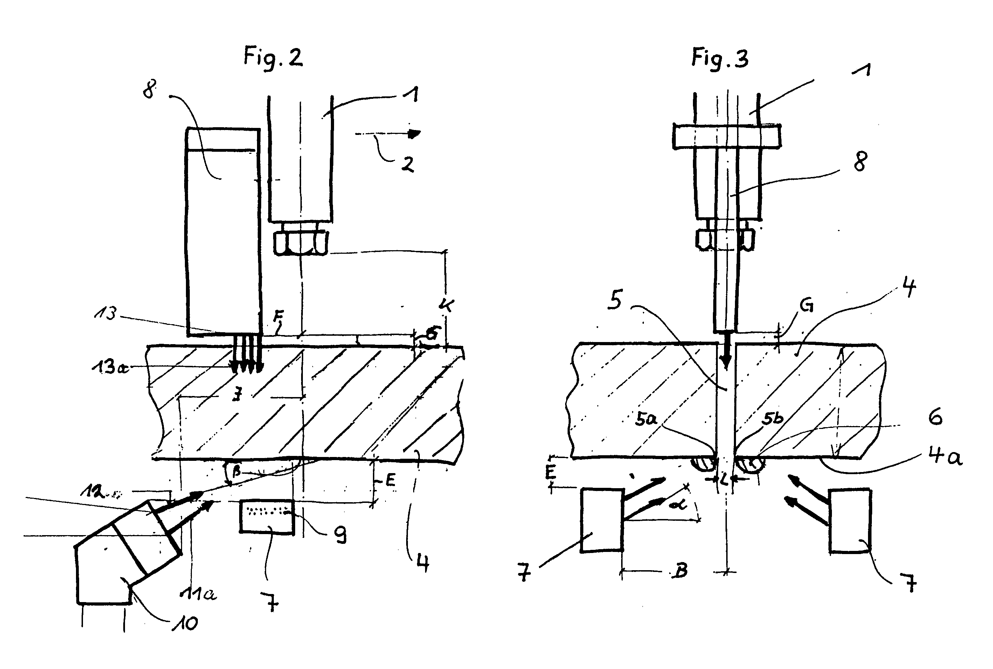

Der Schneidbrenner 1, der sich in die durch den Pfeil 2 dargestellte Schneidrichtung bewegt, sendet einen Schneidstrahl 3 aus. Wie in Fig. 3 zu sehen ist, wird dadurch in dem Werkstück 4 eine Schnittfuge 5 erzeugt. Dabei bilden sich an der Werkstückunterfläche 4a Brennschneidbärte 6 aus.

Wie die Fig. 2 und 3 zeigen, sind unterhalb des Werkstückes 4 Flämmblasdüsen 7 angeordnet, die einen Sauerstoff rechtwinklig zur Schneidrichtung in einem Winkel von 10 bis 30° gegen die Werkstückunterfläche 4a aussenden. Im vorliegenden Beispiel wird der Sauerstoff mit einem Druck von 4 bar unter einem Winkel von 16° gegen die Werkstückunterfläche 4a geblasen. Durch die Sauerstoffstrahlen wird die aus der Schneidfuge austretende, sich an den unteren Schnittkanten 5a, 5b ansammelnde Schlacke zur Schnittfuge 5 zurückgetrieben und von einer Schnittfugensäuberungsdüse 8, die in Schneidrichtung gesehen hinter dem Schneidstrahl 2 bzw. dem Schneidbrenner 1 angeordnet ist und Luft nach unten in die Schnittfuge 5 sendet, weggeblasen. Die auf jeder Seite der Schnittkanten 5a, 5b angeordneten Flämmblasdüsen 7 können mit schlitzförmigen oder runden Austrittsöffnungen 9 versehen sein.

Ebenfalls unter dem Werkstück – wie vor allem aus Fig. 2 entnommen werden kann – ist eine Restputzdüse 10 unter dem Werkstück 4 angeordnet und sendet unter einem Winkel β zur Werkstückunterfläche neben die Schneidfuge in Schneidrichtung Luft aus. Der Winkel β beträgt 5°, kann aber 3 bis 30° betragen. Wie Fig. 2 zeigt, kann neben einer Austrittsöffnung 11 auch eine Austrittsöffnung 12 hinzutreten, so dass ein Luft-Sauerstoff-Gemisch gegen die Werkstückunterfläche 4a von der Restputzdüse 10 geblasen wird. Die Restputzdüse 10 weist eine Vielzahl von neben- und übereinander angeordneten Austrittsöffnungen auf, die in zwei getrennten Düsen oder in zwei Gruppen vorgesehen sind.

Im einzelnen ist bei dem beschriebenen Ausführungsbeispiel die folgende Anordnung der Düsen vorgesehen.

Die Flämmblasdüsen 7 sind in einem Abstand A von 10 mm hinter und gegebenenfalls auch neben oder vor dem austretenden Schneidstrahl 3 auf die Schnittkanten 5a und 5b gerichtet. Die seitliche Abstand B der Flämmblasdüse 7 vom Schneidstrahl 3 beträgt 85 mm, so dass der Abstand C zwischen den beiden Flämmdüsen 170 mm beträgt. Die Flämmblasdüsen 7 senden einen Gasstrahl von einer Breite D von etwa 25 mm aus, wobei die Bohrungen in zwei Reihen versetzt angeordnet sind. Der Abstand E zwischen Werkstückunterfläche 4a und Flämmblasdüse 7 beträgt 25 mm.

Die Schnittfugensäuberungsdüse 8 befindet sich in einem Abstand F von 20 bis 50 mm hinter dem Schneidstrahl 3 in einer Höhe G von 20 bis 120 mm über dem Werkstück 4. Die Schnittfugensäuberungsdüse 8 weist schlitzförmige oder runde Gasaustrittsöffnungen 13 auf, die einen Gasstrahl 13a in einer Breite B von 25 mm aussenden.

Der Gasstrahl 13a muss auf alle Fälle eine entsprechende Länge in der Schnittfuge aufweisen und mit genügend Energie, die von den seitlich angeordneten Flämmblasdüsen weiterverbrannte, in die Schneidfuge zurückgeblasene Schlacke nach unten wegblasen, wie auch der Gasstrahl 11a, 12a der Restputzdüse 10 bei geeigneten Mengen, Drücken und Strömungsgeschwindigkeiten bedarfsweise auch neben oder vor dem austretenden Schneidstrahl 3 auf die vorhandene und noch entstehende Schnittkante 5a bzw. 5b gerichtet ist. Der Abstand I der Restputzdüse 10 vom Schneidstrahl beträgt 125 mm und kann etwa 100 bis 150 mm betragen. Der Schneidbrenner 1 ist in einem Abstgand K von 120 mm über dem Werkstück 4 angeordnet und erzeugt – je nach Druck – im vorliegenden Fall eine Schnittfugenbreie L von etwa 6 mm. Während der Sauerstoff der Flämmblasdüse 4 bar und die Luft der Ablassdüse 5 bar beträgt, sind die Drücke der Restputzdüse für den Luft- und Sauerstoffstrahl 2 bar. Es ist einsichtig, dass je nach Düsenart bzw. -ausführung die Drükke bzw. Druckverluste, Mengen und Gasgeschwindigkeiten verschieden sind. Diese hängen auch ab von der Einstellung der Abstände, Drücke und Schneidgeschwindigkeiten sowie der Materialtemperatur. Dementsprechend ist auch die Bartbeseitigung unterschiedlich vollständig und die Zusammensetzung der Restbärte verschieden. Während der Schneidbart 40 bis 50% verbranntes Eisen enthält, konnte bei dem Restbart ein Bestandteil von 80 bis 100% Zunder, also verbranntes Eisen mit nur noch wenig Eisengehalt, festgestellt werden. Eine mittlere Bartgrösse wurde bei etwa 15 mm Dicke und 25 mm Breite je nach Betriebsbedingungen ermittelt, während die mittlere Restbartgrösse bei etwa 1,5 mm Dicke und etwa 6 mm Breite liegt. Nach dem Restbartputzen verbleibt mittlerer Zunderfilm oder Zunderstreifen von 0,5 mm × 3 mm, der mit dem Fingernagel abgedrückt werden kann, da keine metallische Verbindung mehr besteht. Bei guter Einstellung kann unter Umständen sogar eine metallisch blanke, wenn auch leicht abgerundete Kante entstehen. Die günstige Restbartzusammensetzung ermöglicht es auch, zum Entfernen der Restbärte Schneidrollen 15 vorzusehen. Wie Fig. 5 zeigt, ist die Schneidrolle 15 auf einer zur Werkstückunterfläche 4a geneigt verlaufenden Welle 16 angeordnet, so dass die Schneidrolle 15 nur mit der angearbeiteten Ringfläche 17 das Werkstück berührt und dieses durch Reibung die Schneidrolle 15 dreht, wobei ein bestimmter Anpressdruck vorgesehen wird. Sie sind in einer Entfernung von etwa 100 mm unter dem Schneidstrahl 3 und von mindestens 50 mm von den Flämmblasdüsen 7 bzw. den Restputzdüsen 10 angeordnet. Für den Restbart einer jeden Schnittkante 5a, 5b ist je eine Schneidrolle 15 vorgesehen, die die ihr zugeordnete Schnittkante 5b um maximal Schnittfugenbreite L überragt. Die beiden Schneidrollen 15 sind in Schneidrichtung dem Querschnitt der Restbärte 18 entsprechend ausreichend versetzt hintereinander angeordnet.

Beim Betrieb ohne Restputzdüsen 10 gibt es nur einen senkrechten Schlackenabtransport. Mit Nachputzdüsen wurde ein Schlackenvorlauf erzielt, der etwa 250 mm vor dem Schneidstrahl 3 ablöst und im Bogen nach unten fällt. Unter Berücksichtigung der sich ablösenden Funken und der vorlaufenden Schlackenmenge und ihres Fallwinkels kann ein nicht dargestellter bewässerter Schlackenfang aus Kupfer 300 bis 500 mm vor dem Schneidstrahl 3 angeordnet werden.

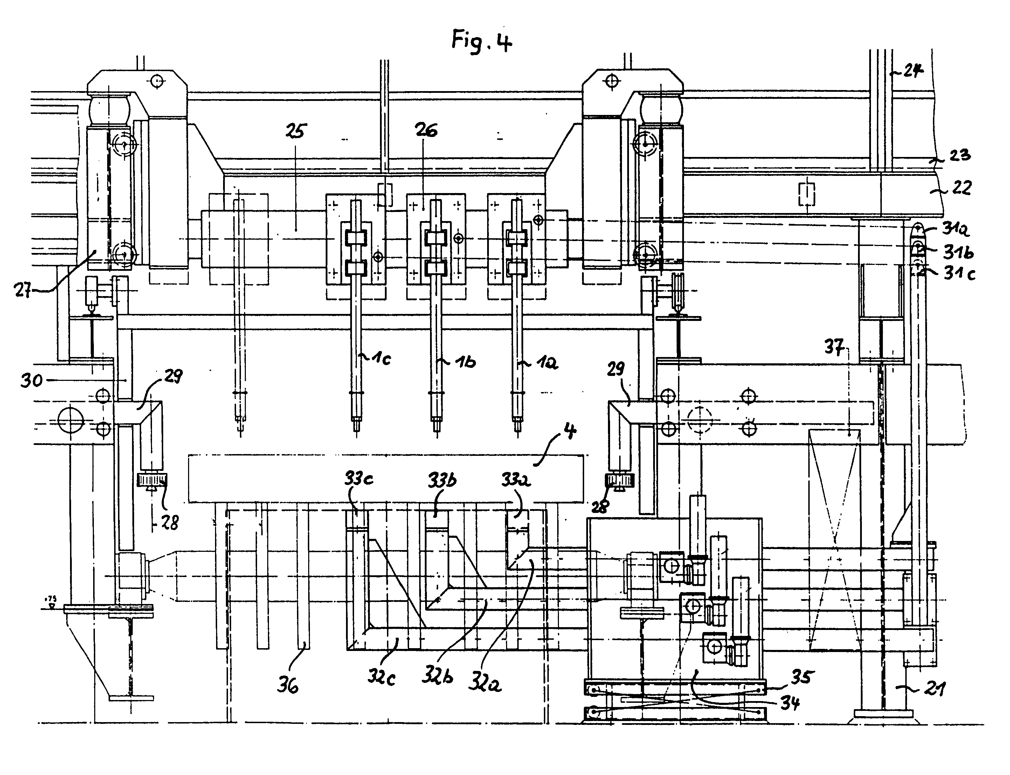

Die Fortbildung der Erfindung, bei der die Schneidbrenner 1a–c der Bartbeseitigungseinrichtung, bestehend aus den Flämmblasdüsen 7 der Schnittfugensäuberungsdüse 8 und der Restputzdüse 10, zu einer Arbeitseinheit zusammengefasst sind, ermöglicht die verschiedenen Anwendungen, so insbesondere bei einer Mehrfachlängsteilanlage. Die in Fig. 4 dargestellte Längsteilanlage besitzt ein Maschinenportal, bestehend aus den Stützen 21, von denen nur eine gezeigt ist, und einem Querträger 22, auf dem ein Laufgsteg 23 mit Geländer 24 vorgesehen ist. Auf einem Ausleger 25 sind Brennerwagen 26 angeordnet, welche die Brenner 1a bis 1c tragen. Diese Brenner 1a bis 1c können durch eine Höhenverstellungseinrichtung 27 in bezug auf das Werkstück 4 eingestellt werden. An den beiden Seiten des Werkstücks 4 sind Messrollen 28 vorgesehen, die die absolute Breite des Werkstücks 4 und seine genaue Lage messen. Die Messrolle 28 ist an bewegbaren Armen 29 befestigt, die sich durch Öffnungen in einer Schallschutzhaube 30 erstrecken. Die Schneidbrenner 1a bis 1c sind über Verbindungen 31a bis 31c mit den zugehörigen Bartbeseitigungseinrichtungen 32a bis 32c zu Arbeitseinheiten verbunden. Die Bartbeseitigungseinrichtungen 32a bis 32c tragen an ihren Köpfen 33a bis 33c die Düsenanordnungen, wie sie bereits beschrieben worden sind. Für die Arbeitseinheiten sind eine Querverstelleinrichtung 34 und ein Höhenverstelltisch 35 vorgesehen. Auf diese Weise ist es möglich, dass zum Längsteilen eines Werkstücks 4 in mehrere Teilstücke jede Arbeitseinheit für sich motorisch mit Wegmessung verstellbar ist. Die Arbeitseinheiten sind auf einem höhenverstellbaren Tisch 35 montiert, so dass die genauen Düsenhöhenabstände nach der Lage eines auf der Oberfläche des Werkstücks 4 schleifenden Tasthebels, der nicht dargestellt ist, nachstellbar sind.

Die beschriebenen Arbeitseinheiten sind auf einem mit Schneidgeschwindigkeit längs verfahrbaren Wagen angeordnet und reichen über und unter das Werkstück 4. Dieses ist während des Schneidens auf einem Rollgang angeordnet, dessen Rollen 36 im Arbeitsbereich abgesenkt werden können.

Von den Messrollen 28 werden die Messergebnisse zur Steuerung der Arbeitseinheit zum Erzielen gleich breiter Teilstücke an einen Rechner gegeben, der den jeweiligen Brennerquerverfahrmotor 34 steuert. Eine Gassteuertafel 37 dient der einstellbaren Zuführung der für die Bartbeseitigungseinrichtung erforderlichen Gase.

**Patentansprüche**

1. Verfahren zum Erzeugen bartfreier Stranggussstücke (4), bei dem die durch Brennschneiden an der Brennschneidunterkante entstehenden Bärte (6) aufgeschmolzen und durch die kinetische Energie eines Gasstrahls weggeblasen werden, wobei Sauerstoff rechtwinklig zur Schneidrichtung (2) schräg gegen die Werkstückunterfläche (4a) geblasen wird, dadurch gekennzeichnet, dass Gase von oben in die Schnittfuge (5) hinter dem Schneidstrahl (3) eingeblasen werden und dass die entstehenden Restbärte (6) mit Hilfe von Schneidrollen (15) oder dadurch entfernt werden, dass Luft unter einem Winkel (β) von 3 bis 10° zur Werkstückunterfläche (4a) neben die Schnittfuge (5) in Schneidrichtung (2) geblasen wird.

2. Verfahren nach Anspruch 1, dadurch gekennzeichnet, dass Luft von oben in die Schnittfuge (5) eingeblasen wird.

3. Verfahren nach Anspruch 1 oder 2, dadurch gekennzeichnet, dass der Sauerstoff unter einem Winkel (α) von 10 bis 30° gegen die Werkstückunterfläche (4a) geblasen wird.

4. Verfahren nach Anspruch 3, dadurch gekennzeichnet, dass die gegen die Werkstückunterfläche (4a) geblasene Luft mit Sauerstoff zu einem Luft-Sauerstoff-Gemisch angereichert wird.

5. Verfahren nach einem der Ansprüche 1 bis 4, dadurch gekennzeichnet, dass die Schneidrollen (15) von unten gegen die Werkstückkante (5a, 5b) angepresst und die Restbärte (6) zur Schnittfuge (5) hin abgeschert werden.

6. Vorrichtung zur Durchführung des Verfahrens nach einem der Ansprüche 1 bis 5, bei der rechtwinklig zur Schneidrichtung und schräg gegen die Werkstückunterfläche Flämmblasdüsen gerichtet sind, dadurch gekennzeichnet, dass der Winkel (α), unter dem die Flämmblasdüsen (7) gegen die Werkstückunterfläche (4a) gerichtet sind, 10 bis 30° beträgt, dass hinter dem Schneidstrahl (3) über der Schnittfuge (5) Schnittfugensäuberungsdüsen (8) angeordnet sind und dass Restputzdüsen (10) neben der Schnittfuge (5) in Schneidrichtung unter einem Winkel (β) von 3 bis 30° zur Werkstückunterfläche gerichtet sind.

7. Vorrichtung nach Anspruch 6, dadurch gekennzeichnet, dass jede Seite (5a, 5b) eine oder mehrere Flämmblasdüsen (7) mit schlitzförmigen oder runden Austrittsöffnungen (9) vorgesehen sind.

8. Vorrichtung nach Anspruch 7, dadurch gekennzeichnet, dass die Flämmblasdüsen (7) etwa 10 mm hinter und gegebenenfalls auch neben oder vor dem austretenden Schneidsauerstoffstrahl (3) auf die Schnittkante (5a, 5b) gerichtet sind.

9. Vorrichtung nach Anspruch 6 oder 7, dadurch gekennzeichnet, dass die Schneidfugensäuberungsdüsen (8) etwa 20 bis 50 mm hinter dem Schneidstrahl (3) und etwa 20 bis 120 mm über dem Werkstück (4) angeordnet sind und schlitzförmige oder runde Gasaustrittsöffnungen (13) aufweisen.

10. Vorrichtung nach einem der Ansprüche 6 bis 9, dadurch gekennzeichnet, dass die Restputzdüsen (10) in Schneidrichtung (2) neben der Schnittfuge (5) etwa 100 bis 150 mm hinter dem Schneidstrahl (3) und etwa 5 bis 15 mm neben der Mittelachse der Schnittfuge 5 angeordnet sind.

11. Vorrichtung nach einem der Ansprüche 6 bis 10, dadurch gekennzeichnet, dass die Restputzdüse (10) eine Vielzahl von neben- und übereinander angeordneten Austrittsöffnungen (11, 12) aufweist, die in zwei getrennten Düsen oder in zwei Gruppen in einer Düse vorgesehen sind.

12. Vorrichtung nach einem der Ansprüche 6 bis 11, dadurch gekennzeichnet, dass zum Entfernen der Restbärte (6) Schneidrollen (15) vorgesehen sind, die von unten gegen das Werkstück (4) gedrückt sind und die eigentlichen Schnittkanten (5a, 5b) um maximal die Breite der Schnittfuge (5) überragen und in Schneidrichtung (2) den maximalen Bart- oder Bartrestquerschnitt entsprechend ausreichend versetzt hintereinander angeordnet sind.

13. Vorrichtung nach Anspruch 12, dadurch gekennzeichnet, dass die Schneidrollen (15) mindestens in 100 mm Entfernung hinter dem Schneidstrahl (3) oder mindestens in 50 mm Entfernung hinter den Flämmblasdüsen (7) bzw. den Restbartdüsen (10) angeordnet sind.

14. Vorrichtung nach Anspruch 12 oder 13, dadurch gekennzeichnet, dass die Schneidrollen (15) sich drehen und auf geneigt zur Werkstückunterfläche (4a) verlaufenden Wellen (16) sitzen, so dass die Schneidrollen (15) nur im Schnittkantenbereich mit angearbeiteter Ringfläche (17) das Werkstück (4) berühren und das Werkstück (4) durch Reibung die Schneidrollen (15) dreht.

15. Vorrichtung nach einem der Ansprüche 12 bis 14, dadurch gekennzeichnet, dass die Ringfläche (17) der Schneidrollen (15) durch Vertiefungen in Schnittkantenabschnitte zum spanweisen Bartentfernen aufgelöst ist.

16. Vorrichtung nach einem der Ansprüche 1 bis 15, dadurch gekennzeichnet, dass die Schneiddüsen (1) mit der Bartbeseitigungseinrichtung (7, 8, 10) zu einer Arbeitseinheit zusammengefasst sind.

17. Vorrichtung nach Anspruch 16, dadurch gekennzeichnet, dass zum Längsteilen eines Werkstücks (4) in mehrere Teilstücke mehrere Arbeitseinheiten (1, 7, 8, 10) vorgesehen sind und dass jede für sich motorisch mit Wegmessung verstellbar ist.

18. Vorrichtung nach Anspruch 16, dadurch gekennzeichnet, dass die Arbeitseinheiten (1, 7, 8, 10) auf einem höhenverstellbaren Tisch (35) montiert sind und die genauen Düsenhöhenabstände nach der Lage eines auf der Werkstückoberfläche schleifenden Tasthebels nachstellbar sind.

19. Vorrichtung nach einem der Ansprüche 16 und 17, dadurch gekennzeichnet, dass die Arbeitseinheit (1, 7, 8, 10), auf einem mit Schneidgeschwindigkeit längsverfahrbaren Wagen angeordnet, über und unter das Werkstück (4) reicht und ein das Werkstück (4) während des Schneidens unterstützender Zu- und Abführrollgang mit absenkbaren Rollen (36) zum jeweiligen Absenken im Arbeitsbereich ausgerüstet ist.

20. Vorrichtung nach Anspruch 16 bis 19, dadurch gekennzeichnet, dass Messrollen (28) den beiden Seiten des Werkstücks (4) folgend die absolute Breite und genaue Lage desselben messen und dass die Messergebnisse zur Steuerung der Arbeitseinheit (1, 7, 8, 10) zum Erzielen gleich breiter Teilstücke an einen Rechner geben, der den jeweiligen Brennerquerverfahrmotor (34) steuert.

## Claims

1. A method of producing flash-free continuous castings (4), flashes (6) which arise on the bottom edge because of flame cutting being melted and blown away by the kinetic energy of a gas stream, oxygen being blown inclinedly towards the underside (4a) of the workpiece perpendicularly to the cutting direction (2), characterised in that gases are injected downwardly into the cut (5) after the cutting torch (3) and the residual flashes (6) which arise are removed by means of cutting rolls (15) or by air being blown in the cutting direction (2) adjacent the cut (5) at an angle ($\beta$) of from 3 to 10° to the workpiece underside (4a).

2. A method according to claim 1, characterised in that air is injected downwardly into the cut (5).

3. A method according to claim 1 or 2, characterised in that the oxygen is blown towards the workpiece underside (4a) at an angle ($\alpha$) of from 10 to 30°.

4. A method according to claim 3, characterised in that the air blown towards the workpiece underside (4a) is enriched with oxygen into a mixture of air and oxygen.

5. A method according to any of claims 1–4, characterised in that the cutting rolls (15) are pressed upwardly on to the workpiece edge (5a, 5b) and the residual flashes (6) are cut off towards the cut (5).

6. An apparatus for performing the method according to any of claims 1–5, wherein flame-scarfing nozzles are directed perpendicularly to the cutting direction and inclinedly towards the workpiece underside, characterised in that the angle ($\beta$) at which the flame-scarfing nozzles (7) are directed towards the workpiece underside (4a) is from 10 to 30°, cut-cleaning nozzles (8) are disposed after the cutting torch (3) above the cut (5) and residue-cleaning nozzles (10) are directed adjacent the joint (5) in the cutting direction at an angle ($\beta$) of from 3 to 30° to the workpiece underside.

7. An apparatus according to claim 6, characterised in that on each side (5a, 5b) there are one or more flame-scarfing nozzles (7) formed with slot-like or round exit orifices (9).

8. An apparatus according to claim 7, characterised in that the flame-scarfing nozzles (7) are directed towards the cut edge (5a, 5b) approximately 10 mm behind and possibly adjacent or before the issuing oxygen cutting torch (3).

9. An apparatus according to claim 6 or 7, characterised in that the cut-cleaning nozzles (8) are disposed about 20 to 50 mm after the cutting torch (3) and about 20 to 120 mm above the workpiece (4) and are formed with slot-like or round gas exit orifices (13).

10. An apparatus according to any of claims 6-9, characterised in that the residue-cleaning nozzles (10) are disposed adjacent the cut (5) approximately 100 to 150 mm after cutting torch (3) and about 5 to 15 mm beside the central axis of the cut (5).

11. An apparatus according to any of claims 6-10, characterised in that the residue-cleaning nozzle (10) is formed with a number of exit orifices (11, 12) which are disposed adjacent one another and which are provided in two separate nozzles or in two groups in a single nozzle.

12. An apparatus according to any of claims 6-11, characterised in that to remove the flashes (6) cutting rolls (16) are provided which are pressed upwardly on to the workpiece (4), extend beyond the cut edges (5a, 5b) by at most the width of the cut (5) and are disposed consecutively in the cutting direction (2) at an offset corresponding to the maximum flash or flash residue cross-section.

13. An apparatus according to claim 12, characterised in that the cutting rolls (15) are disposed at a distance of at least 100 mm after the cutting torch or at least at a distance of 50 mm after the flame-scarfing nozzles (7) or residual flash nozzles (10).

14. An apparatus according to claim 12 or 13, characterised in that the cutting rolls (15) rotate and are disposed on shafts (16) which are at an inclination to the workpiece underside (4a), so that the cutting rolls (15) contact the workpiece (4) only in the cut edge region and by way of an annular surface (17) fashioned on them, the workpiece (4) rotating the cutting rolls (15) by friction.

15. An apparatus according to any of claims 12-14, characterised in that the annular surface (17) us broken up by recesses ainto cut edge portions for removal of the flashes in chip form.

16. An apparatus according to any of claims 1-15, characterised in that the cutting nozzles (1) are combined with the flash-removal facility (7, 8, 10) to form an operating unit.

17. An apparatus according to claim 16, characterised in that a number of operating units (1, 7, 8, 10) are provided for parting off a workpiece (4) into a number of pieces and each such unit is independently adjustable by motor means with distance measurement.

18. An apparatus according to claim 16, characterised in that the operating units (1, 7, 8, 10) are disposed on a vertically adjustable table (35) and the exact nozzle height distance are adjustable in accordance with the position of a sensing lever rubbing on the workpiece surface.

19. An apparatus according to claim 16 and/or 17, characterised in that the operating unit (1, 7, 8, 10) is disposed on a slide movable lengthwise at the cutting rate and extends above and below the workpiece (4) and the feed and delivery roll table which supports the workpiece (4) during cutting has lowerable rolls (36) for lowering in the operative range.

20. An apparatus according to claims 16-19, characterised in that measuring rolls (28) following both sides of the workpiece (4) measure the absolute width and exact position of the workpiece, and the measurement results are supplied to a computer which controls the operating unit (1, 7, 8, 10) to ensure pieces of equal width and which controls the corresponding motor (34) for traversing the blowpipe.

**Revendications**

1. Procédé de fabrication de pièces sans barbes en coulée continue (4) dans lequel les barbes (6) qui se forment par suite du découpage au chalumeau sur l'arête inférieure d'oxycoupage sont fondues et chassées par l'énergie cinétique d'un jet de gaz, de l'oxygène étant soufflé perpendiculairement au sens de découpage (2), obliquement vers la surface inférieure de la pièce (4a), caractérisé en ce que les gaz sont soufflés d'en haut dans la saignée de coupe (5) derrière le dard d'oxycoupage (3) et que les barbes résiduelles (6) qui se forment sont enlevées au moyen d'outils de coupe circulaires (15) ou grâce au fait que de l'air est soufflé sous un angle ($\beta$) de 3 à 10° vers la surface inférieure (4a) de la pièce à côté de la saignée (5) dans le sens de la coupe (2).

2. Procédé selon la revendication 1, caractérisé en ce que de l'air est soufflé d'en haut dans la saignée (5).

3. Procédé selon la revendication 1 ou 2, caractérisé en ce que l'oxygène est soufflé sous un angle ($\alpha$) de 10 à 30° contre la surface inférieure de la pièce (4a).

4. Procédé selon la revendication 3, caractérisé en ce que l'air soufflé contre la surface inférieure de la pièce (4a) est enrichi avec de l'oxygène pour former un mélange d'air et d'oxygène.

5. Procédé selon une quelconque des revendications 1 à 4, caractérisé en ce que les outils de coupe circulaires (15) sont serrés d'en bas contre l'arête de la pièce (5a, 5b) et que les barbes résiduelles (6) sont coupées en direction de la saignée (5).

6. Dispositif pour la mise en oeuvre du procédé selon une quelconque des revendications 1 à 5, dans lequel des torches sont dirigées perpendiculairement au sens d'oxycoupage et obliquement vers la surface inférieure de la pièce, caractérisé en ce que l'angle ($\alpha$) sous lequel les torches (7) sont dirigées contre la surface inférieure de la pièce (4a) est de 10 à 30°, que des buses de nettoyage de la saignée (8) sont disposées derrière le dard d'oxycoupage (3) au-dessus de la saignée (5) et que des buses d'ébarbage résiduel (10) prévues à côté de la saignée (5) sont dirigées dans le sens d'oxycoupage sous un angle ($\beta$) de 3 à 30° contre la surface inférieure de la pièce.

7. Dispositif selon la revendication 6, caractérisé en ce que, de chaque côté (5a, 5b) il est prévu une ou plusieurs torches (7) avec des orifices de sortie (9) en forme de fentes ou ronds.

8. Dispositif selon la revendication 7, caractérisé en ce que les torches (7) sont disposées à environ 10 mm derrière et éventuellement aussi à côté ou devant le dard d'oxycoupage (3) sortant et sont dirigées sur l'arête de coupe (5a, 5b).

9. Dispositif selon la revendication 6 ou 7, caractérisé en ce que les buses de nettoyage de la saignée (8) sont disposées à environ 20 à 50 mm derrière le dard d'oxycoupage (3) et à environ 20 à 120 mm au-dessus de la pièce (4) et présentent des orifices de sortie de gaz (13) en forme de fentes ou ronds.

10. Dispositif selon une quelconque des revendications 6 à 9, caractérisé en ce que les buses d'ébarbage résiduel (10) sont disposées dans le sens d'oxycoupage (2) à côté de la saignée (5) à environ 100 à 150 mm derrière le dard d'oxycoupage (3) et à environ 5 à 15 mm à côté de l'axe médian de la saignée (5).

11. Dispositif selon une quelconque des revendications 6 à 10, caractérisé en ce que la buse d'ébarbage résiduel (10) présente une multiplicité d'orifices de sortie (11, 12) disposés l'un à côté de l'autre et l'un au-dessus de l'autre qui sont prévus dans deux buses séparées ou en deux groupes dans une même buse.

12. Dispositif selon une quelconque des revendications 6 à 11, caractérisé en ce que, pour éliminer les barbes résiduelles (6), il est prévu des outils de coupe circulaires (15) qui sont serrés d'en bas contre la pièce (4) et dépassent les arêtes de coupe (5a, 5b) proprement dites d'une quantité au plus égale à la largeur de la saignée (5) et qui, dans le sens de coupe, sont disposés suffisamment décalés l'un derrière l'autre en correspondance avec la section transversale maximum des barbes ou barbes résiduelles.

13. Dispositif selon la revendication 12, caractérisé en ce que les outils de coupe circulaires (15) sont disposés à une distance d'au moins 100 mm derrière le dard d'oxycoupage (3) ou à une distance d'au moins 50 mm derrière les torches (7) et les buses d'ébarbage résiduel (10).

14. Dispositif selon la revendication 12 ou 13, caractérisé en ce que les outils de coupe circulaires (15) tournent et sont montés sur des axes (16) dirigés obliquement vers la surface inférieure de la pièce (4a) de sorte que les outils de coupe circulaires (15) sont en contact avec la pièce (4) seulement dans la zone de l'arête de coupe par la surface annulaire (17) qu'ils comportent et que la pièce (4) fait tourner les outils de coupe circulaires (15) par frottement.

15. Dispositif selon une quelconque des revendications 12 à 14, caractérisé en ce que la surface annulaire (17) des outils de coupe circulaires (15) est fractionnée par des encoches en segments d'arête de coupe pour éliminer les barbes par enlèvement de copeaux.

16. Dispositif selon une quelconque des revendications 6 à 15, caractérisé en ce que les chalumeaux coupeurs (1) sont réunis avec le dispositif d'enlèvement des barbes (7, 8, 10) en une même unité de travail.

17. Dispositif selon la revendication 16, caractérisé en ce que, pour partager longitudinalement une pièce (4) en plusieurs tronçons, il est prévu plusieurs unités de travail (1, 7, 8, 10) et que chacune d'elles peut être réglée indépendamment des autres par moteur avec mesure de déplacement.

18. Dispositif selon la revendication 16, caractérisé en ce que les unités de travail (1, 7, 8, 10) sont montées sur une table (35) réglable un hauteur et que les distances en hauteur des buses peuvent être ajustées de façon précise en fonction de la position d'un levier de touche frottant sur la surface de la pièce.

19. Dispositif selon une quelconque des revendications 16 et 17, caractérisé en ce que l'unité de travail (1, 7, 8, 10) est disposée sur un chariot se déplaçant longitudinalement à une vitesse égale à la vitesse d'oxycoupage et s'étend par-dessus et par-dessous la pièce (4) et qu'une table à rouleaux d'alimentation et d'évacuation supportant la pièce (4) pendant la coupe au chalumeau est équipée de rouleaux (36) abaissables destinés à s'abaisser dans le zone de travail.

20. Dispositif selon une quelconque des revendications 16 à 19, caractérisé en ce que des tâteurs rotatifs de mesure (28) qui suivent les côtés de la pièce (4) mesurent la largeur absolue et la position exacte de celle-ci et que, pour commander l'unité de travail (1, 7, 8, 10) afin d'obtenir des tronçons de même largeur, les résultats de mesure sont transmis à un ordinateur qui commande le moteur de déplacement transversal du chalumeau (34) intéressé.

Fig. 1

Fig. 5

Fig. 2

Fig. 3

Fig. 4